# EUROPÄISCHE PATENTSCHRIFT

(11) **EP 1 518 788 B1**
(45) Veröffentlichungstag und Bekanntmachung des Hinweises auf die Patenterteilung: **18.04.2007**
(21) Anmeldenummer: 04021939.6
(22) Anmeldetag: 15.09.2004
(51) Int. Cl.: B65B 51/04, A22C 11/12

(54) **Clipmaschinenantrieb**
Clip drive
Entraînement d'un dispositif de fermeture par clip

(30) Priorität: 19.09.2003 DE 20314562 U
(43) Veröffentlichungstag der Anmeldung: 30.03.2005
(73) Patentinhaber: Poly-clip System GmbH & Co. KG, 60489 Frankfurt am Main (DE)
(72) Erfinder: Ebert, Detlef, 61231 Bad Nauheim (DE)
(74) Vertreter: Eisenführ, Speiser & Partner

(56) Entgegenhaltungen:
- EP-A- 0 467 020
- GB-A- 1 361 142
- US-B1- 6 182 734

## Beschreibung

Die Erfindung betrifft einen Clipmaschinenantrieb mit einer mit einem Motor verbindbaren Antriebswelle, einer auf der Welle mitnehmbar angeordneten Kurvenscheibe und einem mit der Kurvenscheibe kommunizierenden Hebel zum Antreiben eines Verschlussmittels.

Clipmaschinen dienen bekanntermaßen dazu, schlauchförmige oder beutelartige Verpackungshüllen, die beispielsweise mit Wurstbrät gefüllt werden, im Anschluss an den Füllvorgang zu verschließen. Dies geschieht in bekannter Weise dadurch, dass die gefüllte Verpackungshülle in einem ersten Arbeitstakt durch Schließen zweier Verdrängerscherenpaare zu einem kurzen Zopf eingeschnürt wird (Verdrängen). Anschließend werden in einem zweiten Arbeitsgang die beiden Verdrängerscherenpaare in axialer Richtung, d.h. in Längsrichtung der Verpackungshülle, auseinander bewegt (Spreizen), wodurch dort befindliches Füllgut verdrängt wird, so dass zwischen den beiden Verdrängerscherenpaaren ein füllgutfreier Zopfabschnitt gewünschter Länge entsteht. Daraufhin wird in einem dritten Arbeitstakt eine in die Bahn eines Stempels - dieser dient als Verschlussmittel - eingeführte Verschlussklammer (Clip) im Bereich des Zopfabschnitts auf die Verpackungshülle gesetzt und zwischen dem Stempel und einer Matrize - diese dient ebenfalls als Verschlussmittel - durch ein Aufeinanderzubewegen des Stempels und der Matrize so verformt, dass sie sich um den Zopfabschnitt legt und diesen verschließt. Bei einer Anordnung zweier Stempel und Matrizen kann der Zopfabschnitt von zwei in axialer Richtung nebeneinander liegend angeordneten Verschlussklammern verschlossen und in demselben Arbeitstakt ebenfalls zwischen diesen beiden Verschlussklammern durchtrennt werden. Nach dem Verschlussvorgang werden die Mittel zum Einschnüren und die Verschlussmittel in einem vierten Arbeitstakt in ihre Ausgangslage zurückbewegt.

Sowohl die beweglichen Verdrängerscherenpaare als auch die beweglichen Verschlussmittel werden von einem Clipmaschinenantrieb der eingangs genannten Art angetrieben. Die erste Kurvenscheibe des Clipmaschinenantriebs weist eine Kurve zur Steuerung der Bewegung eines der oder beider Verschlussmittel auf. Es kommt hierbei nicht darauf an, ob Stempel und Matrize jeweils beide beweglich sind oder nur eines der Verschlussmittel, typischerweise der Stempel. Bei Bedarf kann nämlich auch eine zweite Kurve entweder in derselben Kurvenscheibe oder in einer separaten Kurvenscheibe auf der Antriebswelle vorgesehen sein. Die Bewegung wird von der Kurve mittels des Hebels und ggf. eines entsprechenden das andere Verschlussmittel antreibenden weiteren Hebels, der jeweils an seinem dem Verschlussmittel gegenüberliegenden Arm eine in die zugeordnete Kurve eingreifende Kurvenrolle aufweist, auf das bzw. die Verschlussmittel übertragen. Auf dieselbe Weise wird bekanntermaßen die Bewegung der Verdrängermittel gesteuert.

Das Verschließen des Zopfabschnitts mittels der Verschlussklammer erfolgt demgemäß durch die gegenläufige Bewegung der Verschlussmittel, d.h. entweder des Stempels, der Matrize oder beider Teile. Der minimale Abstand der Verschlussmittel im Umkehrpunkt ihrer Bewegung ist vorzugsweise so einzustellen, dass sich der Clip mit einem gewünschten Druck um den Zopfabschnitt legt, so dass dieser dicht verschlossen aber nicht verletzt wird. Abhängig von der Materialstärke und dem Kaliber der zu verschließenden Verpackungshülle sowie der Form und der Materialstärke des Clips muss der Verschließdruck bzw. der Abstand der Verschlussmittel ggf. variiert werden, damit ein dichtes Verschließen gewährleistet ist. Ferner kann ein Verschleiß an den beweglichen Teilen des Antriebs bzw. der Verschlussmittel dafür sorgen, dass der Abstand der Verschlussmittel im Umkehrpunkt im Laufe der Zeit größer wird. Um dem entgegenzuwirken kann ebenfalls eine veränderte Einstellung notwendig werden.

Solche sog. Clipdruckverstellungen sind bekannt. Zum Beispiel wird hierzu ein in sich gelenkiger, geteilter Hebel zum Zweck der Variation des Abstands zwischen der Kurvenrolle und dem Stempel (bzw. der Matrize) eingesetzt. Dasselbe Prinzip wird bei einer alternativen Clipdruckverstellung angewandt, bei der ein Kniehebel zum Einsatz kommt, dessen drei Schenkel in einem gemeinsamen Gelenk zusammenlaufen. Am ersten Schenkel ist der Stempel angelenkt, am zweiten Schenkel ist die Kurvenrolle gelagert und am drittem Schenkel greift eine Verstelleinrichtung an, mittels der der Relativabstand zwischen Kurvenrolle und Stempel - also die effektive Hebellänge - verändert werden kann.

Aus der EP 467 020 ist ferner eine Clipdruckbegrenzungsvorrichtung mit einer Zylinderanordnung bekannt, bei der mittels eines Vorhubventils ein Tauchzylinder hydraulisch verstellt werden kann.

Nachteilig bei den genannten Verfahren zur Verstellung des Clipdrucks ist, dass ein großer zusätzlicher mechanischer Aufwand notwendig ist, um eine Veränderung der Position der Verschlussmittel im Umkehrpunkt herbeizuführen. Es wird eine Vielzahl zusätzlicher Teile benötigt. Diese sind beispielsweise im Fall des geteilten Hebels oder des Kniehebels gegeneinander beweglich und werden außerdem mit großen Kräften beaufschlagt. Dadurch sind sie sehr verschleißanfällig und tragen zu einer erhöhten Geräuschbildung bei.

Da diese Teile alle im Bereich der Hebel oder der Verschlussmittel angreifen, greifen die Hebel die Steuerbewegung der Kurve auf der Kurvenscheibe ab. Sie führen dabei immer eine ausladende Schwenkbewegung aus. Als Teile des Antriebs müssen sie daher aus Gründen der Arbeitsicherheit während des Betriebs der Maschine unzugänglich hinter einer Abdeckung bzw. innerhalb eines geschlossenen Maschinengehäuses angeordnet sein. Ein Zugang von außen durch eine Bedienperson zum Zweck der Verstellung des Clipdrucks ist ohne Öffnen dieses Maschinengehäuses daher nicht ohne weiteres möglich. Ein Gestänge, das beispielsweise an dem Kniehebel angreift, um eine Veränderung der effektiven Hebellänge zu bewirken, und das durch eine Öffnung in der Wand des Maschinengehäuses nach außen geleitet wird, muss zur Unterdrückung der Schwenkbewegung durch einen erhöhten mechanischen Aufwand entkoppelt werden.

Schließlich erfordert die Verwendung einer hydraulischen Verstellung wegen Abdichtungsproblemen und aufgrund von Hygienevorschriften bei der Wurstherstellung erhöhte Aufmerksamkeit.

Aufgabe der vorliegenden Erfindung ist es demgemäß, einen alternativen Clipmaschinenantrieb der eingangs genannten Art bereitzustellen, der einen einfachen mechanischen Aufbau aufweist und eine leicht zugängliche Verstellung des Clipdruckes ermöglicht.

Diese Aufgabe wird durch einen Clipmaschinenantrieb der eingangs genannten Art gelöst, bei dem zwischen die Antriebswelle und die Kurvenscheibe ein Exzenter zwischengeschaltet ist.

Eine Verdrehung des Exzenters auf der Antriebwelle gegenüber der Kurvenscheibe bewirkt, dass die Kurvenscheibe die Antriebswelle auf einer Kreisbahn mit dem Radius der Exzentrizität umläuft. Somit ändert sich die Lage der Kurve relativ zu dem Verschlusswerkzeug und dem Hebel. Dies hat gegenüber der bekannten Abstandsänderung zwischen der Kurvenrolle und dem Verschlussmittel, also der Änderung der effektiven Hebellänge, den Vorteil, dass der Hebel einteilig bleibt und somit weniger verschleißanfällig als bei den bekannten Vorrichtungen ist. Ferner ist es bei dem erfindungsgemäßen Antrieb einfacher möglich, die Verstellung des Clipdrucks auch von außerhalb eines den Antrieb umgebenden Maschinengehäuses vorzunehmen. Dies geschieht vorzugsweise dadurch, dass der Exzenter axial über die Kurvenscheibe hinausragt und mit einer außerhalb eines Antriebsgehäuses befindlichen Handhabe verbindbar ist.

Weitere Aufgaben, Merkmale und Vorteile der Erfindung werden nun anhand eines Ausführungsbeispiels mit Hilfe der Zeichnung näher erläutert. Es zeigt:

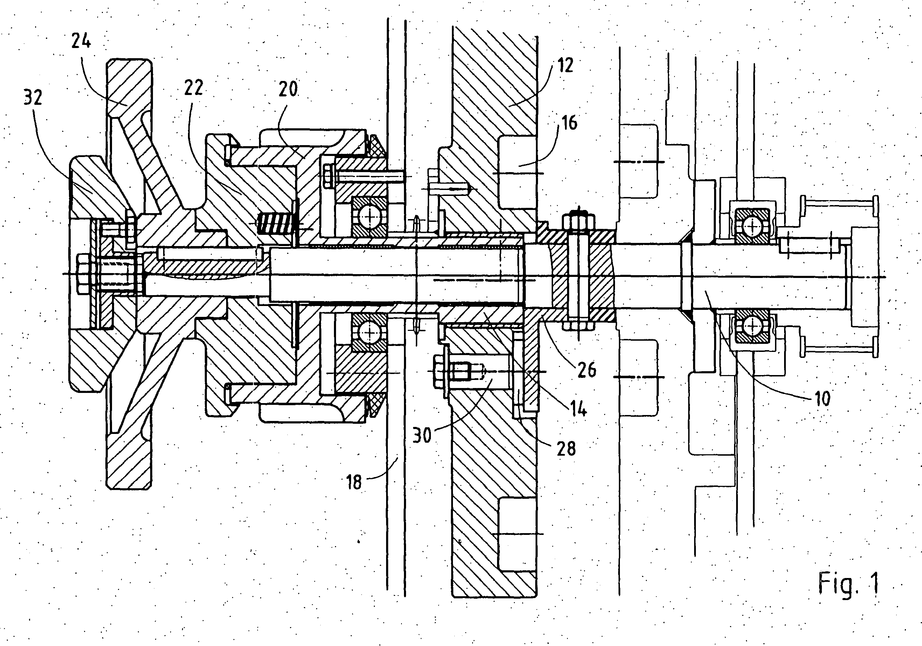

- Fig. 1: eine Schnittdarstellung einer Ausführungsform des erfindungsgemäßen Clipmaschinenantriebs.

Der Clipmaschinenantrieb gemäß Fig. 1 weist eine Antriebswelle 10 auf, auf der eine Kurvenscheibe 12 mitnehmbar gelagert ist. Zwischen die Antriebswelle 10 und die Kurvenscheibe 12 ist eine Exzenterhülse 14 zwischengeschaltet. Diese ist sowohl auf der Welle 10 als auch gegenüber der Kurvenscheibe 12 drehbar gelagert. Durch die isolierte Drehung der Exzenterhülse 14 wird eine in die Kurvenscheibe 12 eingelassene Kurve 16 auf einer Kreisbahn um die Antriebswelle 10 verschoben. Hierdurch wird wiederum die Position einer in die Kurve 16 eingreifenden, an einem Hebel zum Antreiben der Verschlussmittel gelagerten Kurvenrolle (nicht gezeigt) und somit letztlich auch die Position der Verschlussmittel selbst verändert.

Die Drehung der Exzenterhülse 14 erfolgt gemäß dem in Fig. 1 gezeigten Ausführungsbeispiel durch einen Zugriff auf ein über die Kurvenscheibe 12 und aus der Wand 18 eines Maschinengehäuses hinausragendes axiales Ende der Exzenterhülse 14. Hierzu ist ein Verstellring 20 als Handhabe mit diesem Ende form- oder kraftschlüssig verbunden, der durch eine Bedienperson durch Drehung einfach betätigt werden kann.

Im gezeigten Ausführungsbeispiel bildet der Verstellring 20 zusammen mit einem Mitnahmering 22 eine Kupplung. Der Mitnahmering 22 ist zusammen mit einem Handrad 24 zur manuellen Drehung der Welle 10 über eine formschlüssige Verbindung (beispielsweise eine Feder-Nutverbindung) mit der Welle 10 verbunden. Die Kupplung wird ihrerseits mittels eines Feststellrades 32 betätigt, mit dem im geschlossenen Zustand der Mitnahmering 22 zur Bildung einer kraftschlüssigen Verbindung gegen den Verstellring 20 angedrückt und im geöffneten Zustand diese Verbindung gelöst werden kann. Ist die Kupplung geöffnet, so lässt sich demnach der Exzenterring 14 isoliert, das heißt sowohl gegenüber der Welle 10 als auch gegenüber der Kurvenscheibe 12, verdrehen. Ist die Kupplung beispielsweise im Betriebszustand der Clipmaschine geschlossen, dann ist die Drehstellung des Exzenterrings 14 gegenüber der Welle 10 und der Kurvenscheibe 12 fixiert. Der Exzenterring 14 wird bei einer Rotation der Welle 10 folglich mitgedreht. Da, wie oben beschrieben, bei der Verdrehung der Exzenterhülse 14 die Kurvenscheibe auf einer Kreisbahn um die Welle 10 verschoben wird, kann die Verbindung zwischen der Welle 10 und der Kurvenscheibe 12 nicht starr sein. Zum Ausgleich dieser Exzenterbewegung erfolgt die Übertragung des Drehmoments von der Antriebswelle 10 auf die Kurvenscheibe 12 über einen mit der Welle verbundenen Mitnehmer 26. Dieser steht in einer formschlüssigen Verbindung mit einem Ausgleichsstück 28, die jedoch eine radiale Bewegung erlaubt. Ferner ist das Ausgleichsstück 28 mit einem Zapfen 30 drehbar in einer Bohrung der Kurvenscheibe 12 gelagert und kann somit die Exzenterbewegung der Kurvenscheibe ausgleichen.

## Patentansprüche

1. Clipmaschinenantrieb mit einer mit einem Motor verbindbaren Antriebswelle (10), einer auf der Antriebswelle (10) mitnehmbar angeordneten Kurvenscheibe (12) und einem mit der Kurvenscheibe (12) kommunizierenden Hebel zum Antreiben eines Verschlussmittels,
**gekennzeichnet durch** einen zwischen die Antriebswelle (10) und die Kurvenscheibe (12) zwischengeschalteten Exzenter (14).

2. Clipmaschinenantrieb nach Anspruch 1,
**dadurch gekennzeichnet, dass** der Exzenter (14) axial über die Kurvenscheibe (12) hinausragt und mit einer außerhalb eines Maschinengehäuses befindlichen Handhabe (20) verbindbar ist.

3. Clipmaschinenantrieb nach Anspruch 1 oder 2,
**dadurch gekennzeichnet, dass** ein mit der Welle (10) verbundener Mitnehmer (26) zum Einleiten eines Antriebsmoments in ein in der Kurvenscheibe (12) gelagertes Ausgleichsstück (28) zum Ausgleich einer Exzenterbewegung eingreift.

## Claims

1. A clip machine drive, comprising a drive shaft (10) which can be connected to a motor, a cam disk (12) drivably disposed on the drive shaft (10) and a lever communicating with the cam disk (12), for driving a closing means, **characterised by** an eccentric (14) interposed between the drive shaft (10) and the cam disk (12).

2. The clip machine drive of claim 1,
**characterised in that** the eccentric (14) projects axially beyond the cam disk (12) and can be connected to a handle (20) located outside a machine housing.

3. The clip machine drive of claim 1 or 2,
**characterised in that** a driving element (26) connected to the shaft (10) for supplying a drive torque engages with a compensating piece (28) mounted in the cam disk (12) for compensating any movement of the eccentric.

## Revendications

1. Entraînement d'une machine de fermeture par agrafes comprenant un arbre (10) d'entraînement pouvant être lié à un moteur, une came (12) montée sur l'arbre (10) d'entraînement de façon à être entraînée et un levier qui communique avec la came (12) et qui est destiné à entraîner un moyen de fermeture,
**caractérisé par** un excentrique (14) interposé entre l'arbre (10) d'entraînement et la came (12)

2. Entraînement d'une machine de fermeture par agrafes, suivant la revendication 1, **caractérisé en ce que** l'excentrique (14) fait saillie axialement au-delà de la came (12) et peut être relié à une poignée (20) se trouvant à l'extérieur d'une enveloppe de machine.

3. Entraînement d'une machine de fermeture par agrafes, suivant la revendication 2,
**caractérisé en ce qu'**un entraîneur (26), relié à l'arbre (10) et destiné à appliquer un couple d'entraînement, pénètre pour la compensation d'un mouvement d'excentrique dans une pièce (28) de compensation montée dans la came (12).
